Europäisches Patentamt

European Patent Office

Office européen des brevets

(19)

(11) Veröffentlichungsnummer: **0 202 597 B1**

# (12) EUROPÄISCHE PATENTSCHRIFT

(45) Veröffentlichungstag der Patentschrift: **22.05.91**

(51) Int. Cl.⁵: **H04L 7/02**

(21) Anmeldenummer: **86106564.7**

(22) Anmeldetag: **14.05.86**

(54) Schaltungsanordnung zur Rückgewinnung des Taktes eines isochronen Binärsignales.

(30) Priorität: **15.05.85 DE 3517663**

(43) Veröffentlichungstag der Anmeldung:
**26.11.86 Patentblatt 86/48**

(45) Bekanntmachung des Hinweises auf die
Patenterteilung:
**22.05.91 Patentblatt 91/21**

(84) Benannte Vertragsstaaten:
**AT BE CH DE FR GB IT LI NL**

(56) Entgegenhaltungen:
**DE-A- 2 856 017**
**GB-A- 2 143 385**
**JP-A-60 075 148**

**PATENT ABSTRACTS OF JAPAN, unexamined applications, Feld E, Band 9, Nr. 216, 3. September 1985. THE PATENT OFFICE JAPANESE GOVERNMENT Seite 28 E 340**

(73) Patentinhaber: **Siemens Aktiengesellschaft**
**Wittelsbacherplatz 2**
**W-8000 München 2(DE)**

Patentinhaber: **Philips Kommunikations Industrie AG**
**Thurn-und-Taxis-Strasse 10**
**W-8500 Nürnberg 10(DE)**

(72) Erfinder: **Thanhäuser, Gerhard**
**Mozartstrasse 9**
**W-8905 Mering(DE)**
Erfinder: **Lindlar, Heribert**
**Praterstrasse 9**
**8500 Nürnberg 80(DE)**

(74) Vertreter: **Fuchs, Franz-Josef, Dr.-Ing. et al**
**Postfach 22 13 17**
**W-8000 München 22(DE)**

EP 0 202 597 B1

## Beschreibung

Die Erfindung betrifft eine Schaltungsanordnung zur Rückgewinnung das Taktes eines isochronen Binärsignales, bei der durch eine Verzögerungsschaltung und eine Vergleichsschaltung in Abhängigkeit vom Flankenwechsel des Binärsignales Setzimpulse erzeugt werden, die einen Zähler zurücksetzen, wobei der Zähler von einer Taktquelle getaktet wird, deren Frequenz ein Vielfaches der rückzugewinnenden Taktfrequenz beträgt.

Eine Schaltungsanordnung mit den angegebenen Merkmalen ist in der DE-OS 28 56 017 beschrieben. Diese Schaltungsanordnung zeichnet sich zwar durch ihre Einfachheit aus, jedoch ist ihre Anwendbarkeit auf solche isochrone Binärsignale beschränkt, die unter anderem keine langen Folgen identischer Binärwerte enthalten. Treten solche Folgen auf, werden für längere Zeit keine Setzimpulse erzeugt, die den Zähler auf den Takt des Binärsignales synchronisieren. Abweichungen zwischen der tatsächlichen Frequenz am Ausgang des Zählers und der Taktfrequenz des Binärsignales führen dann zu immer größer werdenden Phasenabweichungen, so daß die Abtastung des Binäsignales mit dem rückgewonnenen Takt weit außerhalb der Bitmitte erfolgt. Fehlabtastungen können die Folge sein. Ursache der Frequenzabweichungen am Ausgang des Zählers sind z.B. Abweichungen der Taktquelle - bei der DE-OS 28 56 017 ein freischwingender Oszillator - von ihrer nominellen Frequenz. Zu beheben wäre der aufgezeigte Mangel durch eine Verbesserung der Oszillatoren auf der Sender- und Empfängerseite, um Frequenzabweichungen und daraus resultierendePhasenabweichungen möglichst gering zu halten.

Jedoch auch nach einer solchen Maßnahme, die teuere Oszillatoren erfordert, ist die bekannte Anordnung nur bedingt einsetzbar, wenn das Binärsignal zusätzlich zu den langen Folgen gleicher Binärwerte stark verrauscht ist, also z.B. die Lage der Flanken stark von ihrer Sollage abweicht. Nach der letzten von ihrer Sollage abweichenden Flanke vor einer längeren Folge identischer Binärwerte, kann der Zähler für längere Zeit mit erheblicher Phasenabweichung weiterlaufen, bevor eine erneute Synchronisation erfolgt. Wiederum können Fehlabtastungen die Folge sein, zumal dann, wenn die Kennzeitpunkte der auf die letzte Flanke folgenden Signalelemente in der entgegengesetzten Richtung von ihren Sollzeitpunkten abweichen.

Aus der JP-AI 60 75 148 (Fujitsu) und den Patent Abstracts of Japan, unexamined applications, Feld E, Band 9, Nr. 216, 3. Sept. 1985, The Patent Office Japanese Government, ist eine Taktformerschaltung bekannt, durch die Wellenformverzerrungen, Phasenjitter, Phasensprünge und andere Phasenunterschiede verringert werden sollen.

Die Schaltung enthält einen ersten Zähler, der aus einer ersten und einer zweiten Taktfrequenz eine Zwischenfrequenz erzeugt und diese an einen nachgeschalteten Phasenregelkreis abgibt. Der im Phasenregelkreis enthaltene spannungsgesteuerte Oszillator erzeugt ein erstes regeneriertes Taktsignal, das einem ersten Taktsignalausgang sowie einen Frequenzteiler zugeführt wird. Das Ausgangssignal des Frequenzteilers wird an einen Eingang des Phasenvergleichers des Phasenregelkreises sowie über einen zweiten Zähler an einen zweiten Taktausgang abgegeben. Die bekannte Schaltungsanordnung erhält also zwei kontinuierliche Taktsignale aus denen zunächst ein Zwischentaktsignal für den Phasenregelkreis erzeugt wird, so daß sich zusammen mit der Verwendung von drei Zählern bzw. Frequenzteilern eine relativ aufwendige Schaltung ergibt. Die Verarbeitung von aus Datensignalflanken abgeleiteten zufällig auftretenden Impulsen als Taktinformation ist mit dieser bekannten Schaltungsanordnung nicht möglich.

Der Erfindung liegt die Aufgabe zugrunde, eine Schaltungsanordnung der eingangs genannten Art so zu verbessern, daß sie auch zur Taktrückgewinnung aus stark verrauschten Binärsignalen und/oder solchen mit längeren Folgen identischer Binärwerte verwendet werden kann.

Diese Aufgabe wird durch eine Schaltungsanordnung der eingangs erwähnten Art gelöst, die durch die im Kennzeichen des Patentanspruchs 1 angegebenen Merkmale weitergebildet ist.

Vorteilhafte Ausgestaltungen der Erfindung sind in den Unteransprüchen angegeben.

Der Phasenregelkreis reduziert die zufälligen Phasenabweichungen (Jitter) und die systematischen Phasenebweichungen, die bei der bekannten Anordnung wegen der Frequenzabweichungen des freischwingenden Oszillators auftreten. Die Gesamtanordnung hat eine Jitterübertragungsfunktion, die nur von den Parametern des Phasenregelkreises abhängt. Sie kann daher so ausgelegt werden, daß der Jitter einer Kettenschaltung mehrerer Anordnungen - wie sie z.B. bei mehreren Zwischengeneratoren einer Übertragungsstrecke vorliegt - innerhalb vertretbarer Grenzen bleibt. Die Gesamtanordnung nach der Erfindung ist damit auch vorteilhaft gegenüber einem Phasenregelkreis, der - ohne die bekannte Anordnung - zur Jitterreduktion eingesetzt wird, weil in einem solchen Fall die Jitterübertragungsfunktion von der Bäufigkeitsverteilung der Flanken im isochronen Binärsignal abhängt; daher müßte man bei der Auslegung des Phasenregelkreises das isochrone Binärsignal in der Weise einschränkend festlegen, daß man eine vorgegebene Häufigkeitsverteilung der Flanken fordert.

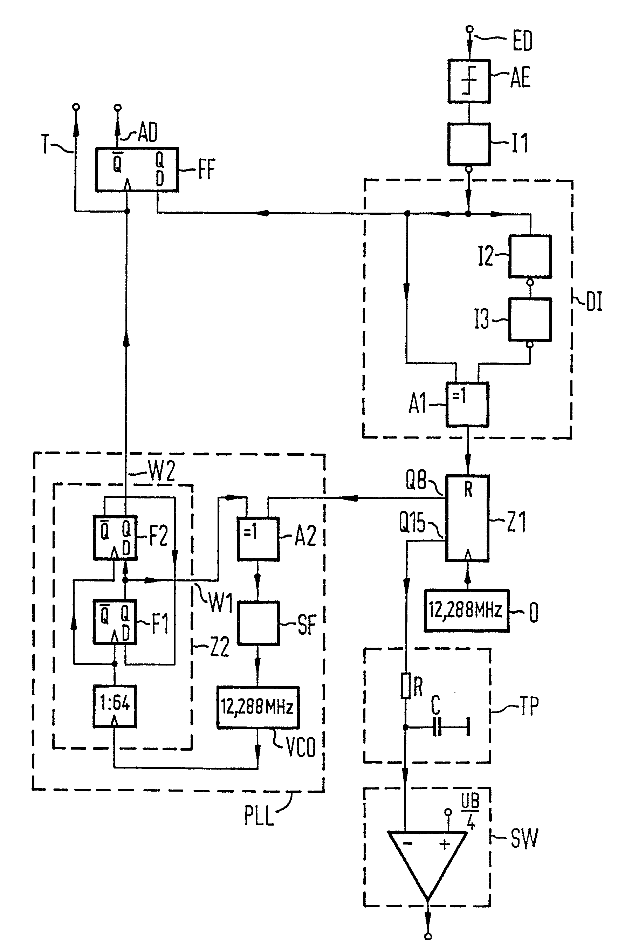

Anhand der Figur soll ein Ausführungsbeispieles derErfindung näner erläutert werden. Die Figur zeigt das Blockschaltbild eines Ausführungsbeispiels der Erfindung.

Ein unter Umständen stark verrauschtes isochrones Binärsignal ED - hier das Binärsignal des Dienstkanales eines 140 GF-Systemes - wird mit einer nominellen Bitrate von 48 kbit/s einem Amplitudenentscheider AE zugeführt. Das amplitudenregenerierte Binärsignal wird durch einen ersten Inverter I1, der zur Versteilerung der Flanken und zur Pegelanpassung vorgesehen ist, invertiert und sowohl an einen Differenzierer DI als auch an den Dateneingang D eines Flip-Flops FF geleitet. Durch das Flip-Flop FF wird das amplitudenregenerierte Binärsignal mit dem rückgewonnen Takt T abgetastet, nochmals invertiert und als AusgangssignalAD zusammen mit dem Takt T zur weiteren Verarbeitung weitergeleitet.

Zur Rückgewinnung des Taktes T werden zunächst durch den Differenzierer DI aus den steigenden und fallenden Flanken des amplitudenregenerierten Binärsignales schmale Setzimpulse erzeugt, die einen Zähler Z1 zurücksetzen.

Der Differenzierer DI besteht aus einem Antivalenz-Gatter A1, dem das amplitudenregenerierte Binärsignal sowohl durch zwei Inverter I2, I3 verzögert als auch unverzögert zugeführt wird. Der Ausgang des Antivalenz-Gatters A1 ist mit dem Rücksetzeingang R des ersten Zählers Z1 verbunden.

Der Zähler Z1 zählt die Impulse eines freischwingenden Oszillators O, dessen nominelle Frequenz 12,288 MHz beträgt. Jeder 256-ste Impuls des Oszillators O oder ein Setzimpuls am Eingang R führt zu einer fallenden Flanke an einem Ausgang Q8 des Zählers Z1. An diesem Ausgang Q8 liegt ein Takt an, dessen Frequenz nominell mit dem Takt des isochronen Binärsignales ED übereinstimmt, also nominell 48 MHz beträgt.

Da jedoch der Zähler Z1 mit Flanken synchronisiert wird, die von ihrer Sollage in beiden Richtungen erheblich abweichen können, stellt auch der Takt am Ausgang Q8 des Zählers Z1 ein Taktsignal dar, dessen Flanken ebenfalls von ihrer Sollage erheblich abweichen können. Verstärkt werden diese Abweichungen (z.B. durch eine thermisch bedingte Frequenzänderung des Oszillators O) besonders dann, wenn im isochronen Datensignals ED lange Folgen identischer Binärwerte auftreten - beim oben erwähnten Binärsignal können es maximal 119 Bit sein - und somit keine Setzimpulse an den Zähler Z1 abgegeben werden; sein Lauf wird dann allein von der vom Sollwert differierenden Frequenz des Oszillators O gesteuert.

Der Ausgang Q8 des Zählers Z1 ist mit einem Eingang des Phasenvergleichers A2 eines Phasenregelkreises PLL verbunden, dessen spannungsgesteuerter Oszillator VCO eine eingestellte Nennfrequenz von 12,288 MHz hat. Der Phasenregelkreis ist auf die übliche Weise aus dem Phasenvergleicher - hier ein Antivalenz-Gatter A2 - einem Schleifenfilter SF, dem spannungsgesteuerten Oszillator VCO und einem Teiler Z2 aufgebaut.Der Teiler Z2 teilt die Frequenz des spannungsgesteuerten Oszillators im Verhältnis 1:256 herunter. Er hat zwei Ausgänge W1, W2; am Ausgang W1, der mit einem Eingang des Antivalenz-Gatters A2 verbunden ist, liegt die Regelgröße des Phasenregelkreises PLL an. Wegen der Verwendung eines einfachen Antivalenz-Gatters als digitaler Phasendetektor ist die Regelgröße ein Takt, der um 90° gegenüber der Führungsgröße verschoben ist. Daher kann die Regelgröße nicht zur Abtastung der Bits des amplitudenregenerierten Binärsignales ED verwendet werden, sondern nur ein Takt, der gegenüber der Regelgröße nochmals um 90° verschoben ist und der am zweiten Ausgang W2 des Teilers Z2 als Ausgangsgröße des Phasenregelkreises anliegt.

Die gewünschte Phasenverschiebung läßt sich durch eine besondere Verknüpfung der beiden letzten Stufen des Teilers Z2 auf einfache Weise erreichen. Die beiden Flip-Flops F1 und F2 dieser Stufen werden von Ausgangssignal der vorhergehenden Stufe des Teilers Z2 getaktet. Sämtliche vorhergehenden Stufen des Teilers Z2 sind in der Figur zu einem 1:64-Teiler zusammengefaßt. Der Q-Ausgang des ersten Flip-Flops F1 ist mit dem Dateneingang D des zweiten Flip-Flops F2 und der Q̄-Ausgang des zweiten Flip-Flops F2 ist mit dem Dateneingang D des ersten Flip-Flops F1 verbunden. Die Regelgröße liegt am Q-Ausgang des ersten und die Ausgangsgröße am Q-Ausgang des zweiten Flip-Flops an.

Die Schaltung läßt unmittelbar erkennen, daß die Signale an den Q-Ausgängen der beiden Flip-Flops F1 und F2 um eine Periodendauer des Ausgangstaktes des 1:64-Teilers gegeneinander phasenverschoben sind. Da diese Periodendauer den 4. Teil der Periodendauer des an den Q-Ausgängen der Flip-Flops F1 und F2 anliegenden Taktes ausmacht, beträgt die Phasenverschiebung genau 90°.

Eine Weiterbildung der Erfindung besteht darin, den Zähler Z1 mit mehr Stufen zu versehen, als für die Abzählung der Takte des freischwingenden Oszillators O während der Dauer eines Bits des isochronen Binärsignales ED erforderlich ist, und eine dieser Stufen für die Überwachung des isochronen Binärsignales zu verwenden. Im vorliegenden Beispiel besteht der Zähler Z1 aus 15 Stufen, obwohl acht Stufen ausreichend wären, sofern auf eine Überwachung des Binärsignales ED verzichtet wird. Der Ausgang Q15 der 15-ten, höchstwertigen Stufe des Zählers Z1 führt im Normalfall die Spannung 0 Volt. Erreicht der Zähler Z1 allerdings seinen halben Maximalstand, springt die Spannung am Ausgang Q15 auf die Versorgungsspannung UB des Zählers Z1; diesen Stand erreicht der Zähler Z1 jedoch nur, wenn während 128 Bit des isochronen Binärsignales keine Flanke aufgetreten ist, die den Zähler zurücksetzt. Nach dem oben gesagten kann dieser Fall nur eintreten, wenn die Übertragung unterbrochen ist; die Spannung am Ausgang Q15 oszilliert dann mit einer Frequenz von 187,5 Hz zwischen den Werten 0 Volt und UB. Ein an den Ausgang Q15 angeschlossener R-C-Tiefpaß TP erster Ordnung mittelt die beiden Spannungswerte und führt einem Schnellwertdetektor SW die Spannung $\frac{UB}{2}$ zu. Ist die Schwellspannung des Schwellwertdetektors $\frac{UB}{4}$, so gibt er beim Auftreten von Oszillationen am Ausgang Q15 ein Alarmsignal ab.

**Ansprüche**

1. Schaltungsanordnung zur Rückgewinnung des Taktes eines isochronen Binärsignales, bei der durch eine Verzögerungsschaltung (I2,I3) und eine Vergleichsschaltung(A1) in Abhängigkeit vom Flankenwechsel des Binärsignales Setzimpulse erzeugt werden, die einen Zähler zurücksetzen, wobei der Zähler (Z1) von einer Taktquelle getaktet wird, deren Frequenz ein Vielfaches des rückzugewinnenden Taktfrequenz beträgt,
   **dadurch gekennzeichnet,**
   daß ein Ausgang (Q8) des Zählers (Z1), an dem ein Takt mit der nominellen Frequenz des rückzugewinnenden Taktes anliegt, mit dem Eingang für die Führungsgröße eines Phasenregelkreises (PLL) verbunden ist, dessen Ausgangsgröße als rückgewonnener Takt (T) verwendet wird, daß als Phasenvergleicher des Phasenregelkreises (PLL) ein Antivalenz-Gatter (A2) verwendet wird und daß der Phasenregelkreis (PLL) in seiner Rückkopplungsschleife einen Frequenzteiler (Z2) enthält, dessen letzte beide Stufen aus zwei Flip-Flops (F1, F2) bestehen, die beide vom Ausgangssignal der vorhergehenden Stufe des Frequenzteilers (Z2) getaktet werden, daß der Q-Ausgang des ersten Flip-Flops (F1) mit dem Dateneingang des zweiten Flip-Flops (F2) und der $\overline{Q}$-Ausgang des zweiten Flip-Flops (F2) mit dem Dateneingang des ersten Flip-Flops (F1) verbunden ist, daß die Regelgröße des Phasenregelkreises (PLL) am Q-Ausgang des ersten Flip-Flops (F1) und die Ausgangsgröße am Q-Ausgang des zweiten Flip-Flops (F2) anliegt.

2. Schaltungsanordnung nach Anspruch 1, dadurch gekennzeichnet, daß der Zähler (Z1) einen weiteren Ausgang (Q15) aufweist, an dem bei freiem Lauf des Zählers (Z1) ein Takt auftritt, dessen Frequenz ein Bruchteil der rückzugewinnenden Taktfrequenz beträgt, und daß dieser Ausgang (Q15) über einen Tiefpaß (TP) mit dem Eingang eines Schwellwertdetektors (SW) verbunden ist.

3. Schaltungsanordnung nach Anspruch 2, dadurch gekennzeichnet, daß es sich bei dem Tiefpaß (TP) um einen R-C-Tiefpaß erster Ordnung handelt.

4. Schaltunganordnung nach Anspruch 3, dadurch gekennzeichnet, daß die Schwellenspannung des Schwellwertdetektors (SW) bei einem Viertel der Maximalspannung liegt, die an dem weiteren Ausgang ( Q15) des Zählers(Z1) auftreten kann.

**Claims**

1. Circuit for the clock recovery of an isochronous binary signal, in which set pulses which reset a counter are generated by a delay circuit (I2, I3) and a comparator circuit (A1) as a function of the edge change of the binary signal, the counter (Z1) being clocked by a clock source whose frequency is a multiple of the clock frequency to be recovered, characterised in that one output (Q8) of the counter (Z1), at which a clock having the nominal frequency of the clock to be recovered is present, is connected to the input for the reference variable of a phase-locked loop (PLL), the output variable of which is used as a recovered clock (T), in that an exclusive OR-GATE (A2) is used as the phase comparator of the phase-locked loop (PLL), and in that the phase-locked loop (PLL) contains in its feedback loop a frequency divider (Z2) whose last two stages consist of two flip-flops (F1, F2), which are both clocked by the output signal of the preceding stage of the frequency divider (Z2), in that the Q output of the first flip-flop (F1) is connected to the data input of the second flip-flop (F2) and the Q output of the second flip-flop (F2) is connected to the data input of the first flip-flop (F1), in that the controlled variable of the phase-locked loop (PLL) is present at the Q output of the first flip-flop (F1) and the output variable is present at the Q output of the second flip-flop (F2).

2. Circuit according to Claim 1, characterised in that the counter (Z1) has a further output (Q15) at which, given free running of the counter (Z1), a clock appears whose frequency is a fraction of the clock frequency to be recovered, and in that this output (Q15) is connected via a low-pass filter (TP) to the input of a threshold value detector (SW).

3. Circuit according to Claim 2, characterised in that the low-pass filter (TP) is an RC low-pass filter of the first order.

4. Circuit according to Claim 3, characterised in that the threshold voltage of the threshold value detector (SW) is a quarter of the maximum voltage that may occur at the further output (Q15) of the counter (Z1).

**Revendications**

1. Montage pour récupérer la cadence d'un signal binaire synchrone, dans lequel un circuit de retardement (I2,I3) et un circuit comparateur (A1) produisent, en fonction du changement de flanc du signal binaire, des impulsions de positionnement qui ramènent à zéro un compteur, le compteur (Z1) étant commandé de façon cadencée par une source d'impulsions de cadence, dont la fréquence est égale à un multiple de la fréquence de cadence devant être récupérée,
caractérisé par le fait
qu'une sortie (Q8) du compteur (Z1), à laquelle est appliquée une cadence possédant la fréquence nominale de la fréquence devant être récupérée, est raccordée à l'entrée d'une grandeur pilote d'un circuit de régulation de phase (PLL), dont la grandeur de sortie est utilisée comme cadence récupérée (T), qu'on utilise comme comparateur de phase du circuit de régulation de phase (PLL), une porte OU-Exclusif (A2) et que le circuit de régulation de phase (PLL) contient, dans sa boucle de réaction, un diviseur de fréquence (Z2), dont les deux derniers étages sont constitués par deux bascules bistables (F1,F2), qui sont commandées de façon cadencée, toutes les deux, par le signal de sortie de l'étage précédent du diviseur de fréquence (Z2), que la sortie (Q) de la première bascule bistable (F1) est raccordée à l'entrée de données de la seconde bascule bistable (F2) et que la sortie ($\overline{Q}$) de la seconde bascule bistable (F2) est raccordée à l'entrée de données de la première bascule bistable (F1), que la grandeur de réglage du circuit de régulation de phase (PLL) est délivrée à la sortie (Q) de la première bascule bistable (F1) et que la grandeur de sortie est délivrée sur la sortie (Q) de la seconde bascule bistable (F2).

2. Montage suivant la revendication 1, caractérisé par le fait que le compteur (Z1) possède une autre sortie (Q15), sur laquelle apparaît, lors du fonctionnement libre du compteur (Z1), une cadence dont la fréquence est égale à une fraction de la cadence devant être récupérée, et que cette sortie (Q15) est raccordée par un filtre passe-bas (TP) à l'entrée d'un détecteur à valeur de seuil (SW).

3. Montage suivant la revendication 2, caractérisé par le fait qu'en ce qui concerne le filtre passe-bas (TP), il s'agit d'un filtre passe-bas R-C du premier ordre.

4. Montage suivant la revendication 3, caractérisé par le fait que la tension de seuil du détecteur à valeur de seuil (SW) est égale à un quart de la tension maximale qui peut apparaître sur l'autre sortie (Q15) du compteur (Z1).